# EUROPEAN PATENT APPLICATION

(11) **EP 4 357 806 A1**
(43) Date of publication of application: **24.04.2024**
(21) Application number: 23198995.5
(22) Date of filing: 22.09.2023
(51) Int. Cl.: G01S 7/292, G01S 7/35, G01S 13/72, G01S 13/931, G01S 13/86, G01S 13/91

(54) **A METHOD AND DEVICE FOR FILTERING RADAR REFLECTION POINTS**

(30) Priority: 18.10.2022 CN 202211272017
(71) Applicant: Robert Bosch GmbH, 70442 Stuttgart (DE)
(72) Inventor: ZAPF, Marc Patrick, Shanghai, 200335 (CN); JIANG, Minshuai, Shanghai, 200335 (CN); LIANG, Jinyao, Shanghai, 200335 (CN)

(57) **Abstract**

The present application discloses a method for filtering radar reflection points. The method comprises the following steps: filtering the initial reflection point set based on the attribute information of an initial reflection point set using one or more attribute thresholds to determine a plurality of reflection points belonging to the target range; clustering the plurality of reflection points belonging to the target range to determine the clustering results; adjusting the one or more attribute thresholds based on the clustering results and target detection results determined through a target detection process.

## Description

### Technical Field

The present application relates to the processing of radar reflection points and specifically relates to a method and device for filtering radar reflection points.

### Background Art

Compared with vision-based target detection systems, millimeter-wave radar-based target detection is capable of realizing relatively accurate distance and speed measurements. However, the millimeter-wave radar is subject to refraction, reflection and diffraction effects, as well as reflections from non-target objects, which results in generation of noisy data such as invalid and false points. For example, in various cases where radar is used to monitor traffic on the roads, noisy data will affect the recognition of vehicle targets, thereby causing reduction of the accuracy of subsequent vehicle trajectory monitoring and further affecting subsequent processing.

### Summary of the Invention

The present application aims to provide a method and device for filtering radar reflection points, thereby effectively filtering out noisy data.

According to the first aspect of the present application, a method for filtering radar reflection points is disclosed. The method comprises the following steps: filtering the reflection points in the initial reflection point set based on the attribute information of an initial reflection point set using one or more attribute thresholds to determine a plurality of reflection points belonging to the target range; clustering the plurality of reflection points belonging to the target range to determine the clustering results; adjusting the one or more attribute thresholds based on the clustering results and target detection results determined through a target detection process.

In one or more embodiments of the first aspect of the present application, optionally, the plurality of reflection points are clustered, and the clustering results indicate the number of clusters; the number of clusters is compared with the number of targets as the target detection result, based on which, the one or more attribute thresholds are adjusted. Optionally, the one or more attributes comprises one or more radar cross-sections (RCS), radial velocity (v) of the reflection points, and received signal strength indicator (RSSI) of the reflection points.

Optionally, the RCS threshold and the v threshold of the reflection points are adjusted based on the clustering results and the target detection results determined through a target detection process, wherein the adjustment comprises comparing the number of clusters with the number of targets and adjusting the RCS threshold and the v threshold based on the comparison results. Optionally, the method comprises adjusting the one or more attribute thresholds multiple times; adjusting the RCS threshold first with a specified step size, wherein the v threshold is adjusted after the RCS threshold is continuously adjusted n times, where n is a natural number.

Optionally, clustering the plurality of reflection points comprises clustering the reflection points generated separately for each of a plurality of consecutive frames based on the radar data collection after filtering, and determining the average number of clusters obtained for each frame as the number of clusters. Optionally, the one or more attribute thresholds is adjusted based on the overlapping region formed in the same coordinate system according to the clustering results and the target detection results, wherein the clustering results indicate the regions encompassing each cluster, and the target detection results indicate the regions of individual targets.

According to a second aspect of the present application, the device for filtering radar reflection points is disclosed. The device comprises a processor and memory, wherein the memory stores computer program instructions, and when the computer program instructions are executed by the processor, the processor is capable of executing one or more steps according to the method described in the first aspect of the present application.

According to a third aspect of the present application, a computer program product for filtering radar reflection points is provided, and when the computer program instructions are executed by the processor, the processor is capable of executing one or more steps according to the method described in the first aspect of the present application.

According to a fourth aspect of the present application, a computer-readable storage medium for filtering radar reflection points is provided, and when instructions are executed by the processor, the processor is capable of executing one or more steps according to the method described in the first aspect of the present application.

The present application discloses a method, a device, a computer program product, and a computer-readable storage medium for filtering radar reflection points. These solutions focus on using one or more target detection processes to automatically adjust one or more attribute thresholds for filtering reflection points, and optimizing the effectiveness and specificity of threshold adjustments.

### Description of Accompanying Drawings

The principles, features and advantages of the present disclosure will be more fully understood by referring to the detailed description of the specific exemplary embodiments with reference to the accompanying drawings.
Fig. 1 is a flowchart of the method of filtering radar reflection points according to one embodiment of the present application.
Fig. 2 is a flowchart of the method for filtering radar reflection points according to another embodiment of the present application.
Fig. 3 is a schematic diagram illustrating the clustering results and target detection results according to one embodiment of the present application.
Fig. 4 is a block diagram of the device for filtering radar reflection points according to one embodiment of the present application.

### Specific Embodiments

To provide a clearer understanding of the technical problems, technical solutions, and beneficial technical effects to be addressed by the present disclosure, the following detailed description of the present disclosure will be provided with reference to the accompanying drawings and multiple exemplary embodiments. It should be understood that the specific embodiments described herein are for the purpose of explaining the present disclosure only and are not intended to limit the scope of protection of the present disclosure. Those skilled in the art will easily recognize that the same principles can be applied to different target detection systems and that these same or similar principles can be implemented therein, and any such variations do not depart from the spirit and scope of the present application.

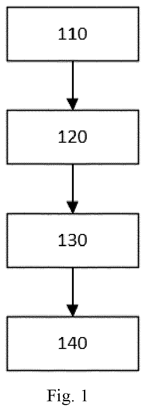

Fig. 1 is a flowchart of the method of filtering radar reflection points according to one embodiment of the present application.

As shown in Fig. 1, the method of filtering radar reflection points comprises steps 110 to 140. This embodiment illustrates, through optional steps 110 to 140, the basic concept of the present disclosure, where thresholds for filtering reflection points are reversely adjusted by assessing the clustering results.

In step 110, information on the initial reflection point set is obtained. The information on the initial reflection point set is the information related to the reflection points generated based on the received signals after the radar device emits electromagnetic waves (e.g., millimeter waves) as radar waves within a predetermined angular range and receives their reflected waves. The information related to reflection points serves as the starting point for the filtering process and can be part of the radar point cloud information. The radar device may be a road test millimeter-wave radar or a vehicle-mounted millimeter-wave radar. The millimeter-wave radar is capable of scanning at a certain frame rate (e.g., 15 frames per second) and within a predetermined angular range to collect electromagnetic wave reflection data. Here, the initial reflection point set typically consists of a plurality of unfiltered reflection points. Each reflection point can comprise various pieces of attribute information, such as the elevation angle or azimuth angle of the reflection point relative to the radar device, the distance (d) from the reflection point to the radar device, the radial velocity (v) and acceleration (acc) from the reflection point to the radar device, the radar cross-section (RCS) of the reflection point, the received signal strength (RSSI) of the reflection point, as well as the coordinate information of the reflection point in the coordinate system of the radar device, etc. The attribute information may also include statistical information related to distance (d), radial velocity (v), elevation angle, or azimuth angle.

In step 120, the initial reflection point set is filtered based on the attribute information of each reflection point in the initial reflection point set using one or more attribute thresholds to determine a plurality of reflection points belonging to the target range. Here, the target range refers to the region of one or more targets to be detected. Reflection points in the initial reflection point set that are not relevant to the target to be detected can be filtered by setting one or more attribute thresholds. One or more attribute thresholds may have initial values in the initial stage, and in the steps described below, the thresholds will be automatically adjusted to optimize noise filtering and/or target categorization. It will be appreciated by those skilled in the art that reflection points from objects of different materials have different RSSIs, and objects at different distances will also result in different RSSIs. Therefore, RSSI thresholds can be set based on categorization purposes. For example, reflection point signals below a specific threshold are considered as noise. For the attribute v, if the target to be detected is a moving vehicle, the reflected point signals with v below a specific threshold can be considered as noise. Thresholds for the RCS of reflection points can also be set based on the reflective region of the target to be detected to filter out reflection points in the initial reflection point set that are not relevant to the target to be detected.

Depending on the target to be detected, corresponding upper and lower thresholds may be set for one or more attributes to obtain effective reflection points. As described below, the thresholds for one or more attributes will be automatically adjusted and become the values that meet the requirement of the current target detection process, thereby improving noise filtering efficiency.

In step 130, a plurality of reflection points are clustered to determine the clustering results. The plurality of reflection points here refers to the reflection points obtained after filtering in step 120. The clustering results are used to assess the threshold setting in step 120. It will be appreciated by those skilled in the art that a plurality of reflection points may be clustered using various existing clustering algorithms. By using a clustering algorithm, all reflection points belonging to the same target object can be grouped into a cluster, and the clustering results may indicate one or more clusters. It will be appreciated by those skilled in the art that clustering can be performed using a K-means clustering algorithm based on Euclidean distance or Manhattan distance, or using a density-based spatial clustering of applications with noise (DBSCAN) algorithm.

In step 140, the one or more attribute thresholds are adjusted based on the clustering results and the target detection results determined through a target detection process. Here, the threshold setting in step 120 is assessed through known target detection processes. The known target detection processes may be known target detection algorithms for millimeter-wave radar, vision-based target detection algorithms, and target detection algorithms that combine millimeter-wave radar and cameras; in other embodiments, the known target detection processes may be target detection solutions provided by a third party or an open-source target detection algorithm. In this embodiment, the one or more attribute thresholds are automatically adjusted by comparing the clustering results with the target detection results determined through a target detection process.

The known target detection processes may be the detection of a specific type of target (e.g., a truck). Thus, automatically adjusting one or more attribute thresholds can form a set of thresholds for effectively categorizing the reflection points of the specific target. In another embodiment, another target detection process for a different category (e.g., a bicycle) may be used in step 140 to adjust the threshold, thereby obtaining another set of thresholds. A plurality of target detection processes can be used concurrently or successively, so that the reflection point filtering in step 120 can be adapted to filtering of noise from various types of targets. Here, different sets of thresholds are individually used to filter the initial reflection point set and are individually automatically adjusted. As a result, the method of this embodiment is capable of improving the efficiency of noise filtering and the effectiveness of categorization.

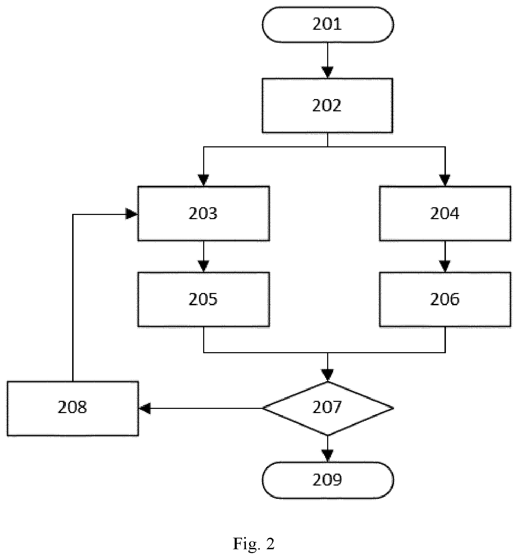

Fig. 2 is a flowchart of the method for filtering radar reflection points according to another embodiment of the present application. Compared with the embodiment in Fig. 1, the embodiment in Fig. 2 specifically describes the adjustment of thresholds.

The method in Fig. 2 starts with step 201.

In step 202, information on the initial reflection point set is received from the radar.

In step 203, for the attribute information of the reflection points in the initial reflection point set, the reflection points in the initial reflection point set are filtered using one or more attribute thresholds to determine a plurality of reflection points that belong to the target range. Here, one or more attribute thresholds may be an unadjusted initial value or a threshold obtained after a previous round of adjustment. The adjustment of thresholds can be performed once or multiple times, with each adjustment being in response to the determination step in step 207 described below.

In step 204, the target is detected using a known or third-party or open-source target detection process. When the target detection process is a target detection algorithm for millimeter-wave radar, the algorithm is used for the same initial reflection point set. When the target detection process is a vision-based target detection algorithm, it will be appreciated by those skilled in the art that synchronized processing of the radar and camera/calibration of the internal and external camera parameters may be performed such that the detection result of the vision-based target detection algorithm corresponds to the radar reflection point information.

In step 205, the plurality of reflection points obtained by filtering in step 203 are clustered and the number of clusters obtained by clustering is determined. A plurality of reflection points obtained through the filtering of point cloud data from a single frame can be clustered to obtain the number of clusters; a plurality of reflection points obtained through filtering of each frame of point cloud data from consecutive frames can be clustered, and the obtained average number of clusters for each frame can be determined as the number of clusters. The clustering results of the frames may be compared with the detection results obtained through the target detection process at the same sampling timing to facilitate the assessment of threshold settings.

In step 206, the number of targets detected by the target detection process is counted.

In step 207, the number of the clusters is compared with the number of targets determined through the target detection process, and when they are equal, the method proceeds to step 209 and ends; otherwise, the method proceeds to step 208 to start the threshold adjustment process. In this embodiment, a comparison based on quantity is described. In other embodiments, it can also involve comparisons or calculations based on other methods, i.e. clustering results and target detection results.

In step 208, one or more attribute thresholds are adjusted based on the comparison results. The attribute thresholds to be adjusted may comprise one or more RCS, v and RSSI of the reflection points. An attribute threshold can be selected for adjustment. The attribute thresholds can be adjusted successively according to the priority of the attributes. Attributes can also be randomly arranged, and thresholds for each attribute can be adjusted successively. As described above, the adjustment of thresholds can be performed once or multiple times, with each adjustment being in response to the determination step in step 207. Thus, the first threshold may be continuously adjusted n times, before the second threshold may be adjusted. In one example, the adjustment of the first threshold can continue until it is determined in step 207 that the number of clusters equals the number of targets. When it is determined in a subsequent step 207 that the number of clusters and the number of targets are not equal again, the adjustment of the second threshold begins.

When the determined number of targets is smaller than the number of clusters, the thresholds may be set to make the filtering criteria stricter; when the determined number of targets is larger than the number of clusters, the thresholds may be set to make the filtering criteria more relaxed. In one example, when the determined number of targets is less than the number of clusters, the lower RCS threshold or the lower v threshold may be increased to consider the reflection points with attributes below the lower threshold as noise. It will be appreciated by those skilled in the art that suitable step sizes may be set for the adjustment of each attribute threshold.

Optionally, in this embodiment, the attribute thresholds to be adjusted in step 208 comprise the RCS threshold and the v threshold of the reflection points. The number of clusters is compared with the number of targets, based on which, the RCS threshold and the v threshold of the reflection points are adjusted. In some cases, adjusting the RCS threshold and the v threshold of the reflection points is effective for facilitating the identification of moving vehicles. In other cases, a choice can be made for adjusting the thresholds of one or more other attributes.

In one example, the RCS threshold is adjusted first with a specified step size, wherein the v threshold is adjusted after the RCS threshold is continuously adjusted n times, where n is a natural number. Adjusting the RCS threshold first refers to adjusting the RCS threshold in the current round of adjustments, and adjusting the v threshold in the next round of continuous adjustments. In another example, adjusting the RCS threshold first refers to adjusting the RCS threshold in the current round of adjustments, and still adjusting the RCS threshold in the next round of continuous adjustments until the number of clusters and the number of identified targets in the subsequent round of determination are determined to be equal. The v threshold is adjusted only when the number of clusters and the determined number of targets are not equal again.

In this embodiment, a single determination refers to a single determination performed on a reflection point set formed at a specific moment or during a certain period of time after filtering. The determination in step 207 may comprise multiple determinations performed at a plurality of consecutive/non-consecutive moments or a plurality of consecutive/non-consecutive time periods. Optionally, the determination in step 207 can also be triggered based on specific events, such as weather events (rainfall or strong winds); the determination in step 207 can be triggered periodically.

The various steps in the flowcharts in Fig. 1 and Fig. 2 can be realized through computer program instructions. These computer program instructions can be provided to the processor of a general-purpose computer, a dedicated computer, or other programmable data-processing device to create a machine for the purpose of the execution of these instructions by the processor of the computer or other programmable data-processing device. In some alternative examples for realization, the steps shown in the boxes may take place in an order different from what is shown in the flowchart. For example, the two boxes shown in sequence may actually be executed in an essentially simultaneous manner or in a different order.

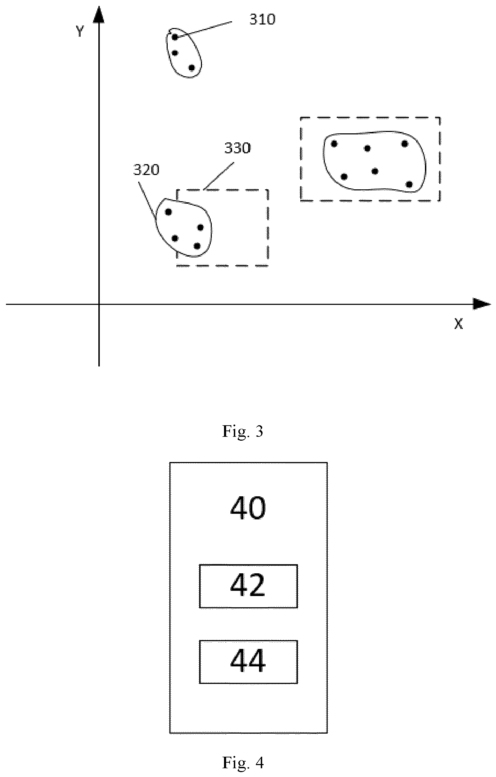

Fig. 3 is a schematic diagram illustrating the clustering results and target detection results according to one embodiment of the present application. As shown in Fig. 3, after executing one or more steps of the method according to Fig. 1 or Fig. 2, the clustering results and target detection results are displayed on a two-dimensional coordinate plane comprising an x-axis and a y-axis. In the figure, 310 indicates a reflection point, 320 indicates a cluster formed by the clustering of filtered reflection points, and 330 indicates an object from the target detection result. As described above in the method described with reference to Fig. 1 and Fig. 2, an initial reflection point set is received from the radar, and the initial reflection point set is filtered based on the attribute information of each reflection point in the initial reflection point set using one or more attribute thresholds to determine a plurality of reflection points belonging to the target range. As shown in Fig. 3, after threshold filtering, a plurality of reflection points indicated by 310 is left. After clustering these reflection points, a cluster indicated by 320 is obtained. The three clusters obtained through clustering are smaller than the two detected objects obtained by the predefined target detection process. Therefore, in the subsequent adjustment process, one or more attribute thresholds can be adjusted for more stringent filtering. Here, the numbers of clusters and targets are compared, and in another embodiment, the thresholds may be adjusted according to the region occupied by the clusters and targets.

For the embodiment in Fig. 3, what is shown may be the processing of data for a single frame of reflected signals. It will be appreciated by those skilled in the art that, in another embodiment, a plurality of consecutive frames of the reflected signals may be processed. In one example, clustering the plurality of reflection points comprises clustering the reflection points generated for each of a plurality of consecutive frames, and determining the average number of clusters obtained for each frame as the number of clusters. The target detection process employed will perform target detection on the same plurality of consecutive frames to estimate the average of the targets to be detected; thereby, the threshold setting is assessed by comparing the average of the clusters with the average of the targets.

In yet another embodiment, the one or more attribute thresholds are adjusted based on the overlapping region (intersection over union, IoU) formed in the same coordinate system according to the clustering results and the target detection results, wherein the clustering results indicate the regions encompassing each cluster, and the target detection results indicate the regions of individual targets.

The IoU indicates the deviation between the clustering results and target detection results. It will be appreciated by those skilled in the art that the reflection points of the clustering results may be labeled using identification boxes or identification blocks to form regional information for each cluster. The regional information for clusters may be either regional coordinate information or regional area information represented by identification boxes or identification blocks. For example, the contour of a cluster may be determined based on the largest and smallest coordinates of the reflection points within that cluster, followed by using the corresponding identification box to encompass that cluster. For the target detection result obtained by the radar point cloud-based target detection algorithm, the target can be identified in the same way, for example, by identifying the four edge points in the coordinate system to obtain the outer contour of the rectangle.

As mentioned earlier, a vision-based target detection algorithm can be used to complete the target detection process. It will be appreciated by those skilled in the art that various ways may be used to determine the mapped region in the radar image corresponding to the target in the pixel image. The mapping process can involve mapping the pixel points in the pixel image into 2D positional coordinates in the radar image, and the mapping may be realized through method of calibration of internal and external camera parameters or through a four-point calibration method.

With further reference to Fig. 3, although the contour of the cluster indicated by 320 is irregularly shaped, as described above, a rectangular box, for example, may be used to encompass the reflection points in the cluster. In this embodiment, instead of comparing the obtained number of the clustering results and the obtained number of the target detection results, the overlapping area formed by the identification frame of the clustering results and the identification frame of the target detection results is calculated. The IoU is equal to the area where the two identification frames overlap divided by the area occupied by the two identification frames as a whole. The maximum value of IoU is 1, at which point the actual area of the object and the estimated area completely overlap with each other; the minimum value of IoU is 0, at which point the actual area of the object and the estimated area have no overlap at all with each other. When the overlapping area is larger, the value of IoU will be larger, based on which, it is considered that the accuracy of filtering and clustering will be higher.

For the case in Fig. 3, the IoU of each cluster may be calculated separately, and then the clustering results may be assessed based on the statistical value of each IoU (e.g., the average IoU or the sum of IoUs). The attribute threshold adjustment step is triggered when the statistical value of the IoU is smaller than a predetermined threshold. As mentioned above, one way to do this is to adjust the thresholds according to priority and step size until a satisfactory IoU is obtained.

Fig. 4 is a block diagram of the device for filtering radar reflection points according to one embodiment of the present application. The device 40 for filtering radar reflection points may comprise a processor 42 and a memory 44. The memory 44 may include read-only memory (ROM) or random access memory (RAM). The device 40 realizes the process of automatic threshold adjustment by executing the program in the memory 44, in particular by executing one or more steps of the method described herein. The device 40 may be a millimeter-wave radar or a vehicle-mounted electronic control unit (ECU), or may be a remote server.

The above one or more embodiments and one or more examples may be realized in whole or in part through software, hardware, or combinations thereof. When using software, they may be realized in whole or in part in the form of a computer program product. The computer program product comprises computer program instructions that may be downloaded to the memory of a controller via a computer network or may be transmitted to the memory of the controller in a wired fashion, which, when the computer program instructions are executed by the processor of the controller, the processor is capable of executing perform one or more steps in the method described herein. The computer program instructions may be provided in the form of a computer-readable storage medium. A computer-readable storage medium referred to herein may be any usable medium that can be accessed by a general-purpose or dedicated computer.

The above descriptions are only specific embodiments of the present application, and the protection scope of the present application is not limited thereto. Those skilled in the art may contemplate other feasible modifications or substitutions based on the technical content and guidance disclosed in the present application, and all such modifications or substitutions fall within the scope of protection of the present application. Where appropriate, the embodiments of the present application and the features of the embodiments may be combined with each other. The scope of protection of the present application is subject to the scope of protection of the Claims.

## Claims

1. A method for filtering radar reflection points, **characterized in that**, the method comprises:
filtering the initial reflection point set based on the attribute information of an initial reflection point set using one or more attribute thresholds to determine a plurality of reflection points belonging to the target range;
clustering the plurality of reflection points belonging to the target range to determine the clustering results;
adjusting the one or more attribute thresholds based on the clustering results and the target detection results determined through a target detection process.

2. The method according to Claim 1, **characterized in that**, the method comprises clustering the plurality of reflection points, wherein the clustering results are the number of clusters;
comparing the number of clusters with the number of targets as the target detection result, and adjusting the one or more attribute thresholds.

3. The method according to Claim 2, **characterized in that**,
the one or more attributes comprises one or more radar cross-sections (RCS), radial velocity (v) of the reflection points, and received signal strength indicator (RSSI) of the reflection points.

4. The method according to Claim 3, **characterized in that**, the method comprises adjusting the RCS threshold and the v threshold of the reflection points based on the clustering results and the target detection results determined through a target detection process, wherein the adjustment comprises comparing the number of clusters with the number of targets, and adjusting the RCS threshold and the v threshold of the reflection points based on the comparison results.

5. The method according to Claim 4, **characterized in that**, the method comprises: adjusting the one or more attribute thresholds multiple times; wherein the RCS threshold is adjusted first with a specified step size, wherein the v threshold is adjusted after the RCS threshold is continuously adjusted n times, where n is a natural number.

6. The method according to Claim 2, **characterized in that**, the method comprises clustering the plurality of reflection points comprises separately clustering the reflection points generated after filtering of each of a plurality of consecutive frames collected by the radar, and setting the average number of clusters obtained for each frame as the number of clusters.

7. The method according to Claim 1, **characterized in that**, the method comprises adjusting the one or more attribute thresholds based on the overlapping region formed in the same coordinate system according to the clustering results and the target detection results, wherein the clustering results indicate the regions encompassing each cluster, and the target detection results indicate the regions of individual targets.

8. A device for filtering radar reflection points, **characterized in that**, the device comprises a processor and a memory, wherein the memory stores computer program instructions, and when the computer program instructions are executed by the processor, the processor is capable of executing the method described in any one of Claims 1 to 7.

9. A computer program product comprising computer program instructions, wherein when the computer program instructions are executed by the processor, the processor is capable of executing the method described in any one of Claims 1 to 7.

10. A computer-readable storage medium, wherein the computer-readable storage medium stores instructions, **characterized in that**, when the instructions are executed by the processor, the processor is capable of executing the method described in any one of Claims 1 to 7.
